# EUROPÄISCHE PATENTANMELDUNG

(11) **EP 4 779 259 A1**
(43) Veröffentlichungstag der Anmeldung: **22.07.2026**
(21) Anmeldenummer: 26152614.9
(22) Anmeldetag: 19.01.2026
(51) Int. Cl.: G01B 5/012, G01B 3/00, G01Q 10/06, G01Q 20/04

(54) **TAKTILE SENSORVORRICHTUNG, SYSTEM MIT DREI TAKTILEN SENSORVORRICHTUNGEN UND VERFAHREN ZUR BESTIMMUNG EINER KRAFTEINWIRKUNG**

(30) Priorität: 17.01.2025 DE 102025101680
(71) Anmelder: SmarAct Holding GmbH, 26135 Oldenburg (DE)
(72) Erfinder: Hülsen, Dr. Helge, 26133 Oldenburg (DE); Meyer, Dr. Hendrik-Marten, 26129 Oldenburg (DE)
(74) Vertreter: Eisenführ Speiser

(57) **Zusammenfassung**

Die Erfindung betrifft eine taktile Sensorvorrichtung 100, 200, 300 zum Inkontaktbringen von zwei Elementen mit (1) einer Positionierungseinheit 110, 210, 310, die ausgestaltet ist, ein erstes Element E1 linear entlang einer Antastrichtung zu positionieren, wobei die Positionierungseinheit aufweist: einen Endeffektor 112, 212, 312, der mit dem ersten Element verbunden ist, und einen Positionssensor 213, der ausgestaltet ist, zumindest eine Änderung der Position des Endeffektors zu detektieren, und (2) einer Steuerung 120, 220, wobei die Steuerung ausgestaltet ist, die Position des Endeffektors auf einen vordefinierten Sollwert zu regeln, eine Differenz eines Istwerts zu dem vordefinierten Sollwert der Position des Endeffektors zu bestimmen, eine Änderung der Differenz oder einer von der Differenz abhängigen Größe zu bestimmen und basierend auf der Änderung der Differenz oder der von der Differenz abhängigen Größe eine Krafteinwirkung durch ein zweites Element auf das mit dem Endeffektor verbundenen ersten Element zu bestimmen.

## Beschreibung

Die vorliegende Erfindung betritt das Gebiet von taktilen Sensorvorrichtungen und insbesondere einer taktilen Sensorvorrichtung zum Inkontaktbringen von zwei Elementen, ein System mit drei taktilen Sensorvorrichtung zur Ausrichtung von zwei ebenen Elementen und ein Verfahren zur Bestimmung einer Krafteinwirkung auf ein erstes Element durch das zweite Element.

Eine derartige taktile Sensorvorrichtung ist im Bereich der Präzisionssensorik und Antriebstechnik im Nanometer-Bereich anwendbar. Insbesondere ist eine derartige taktile Sensorvorrichtung als Antastmechanismus für u.a. automatisierte Montagemaschinen oder Koordinatenmessmaschinen verwendbar, beispielsweise zur präzisen Ausrichtung von zwei ebenen Elementen zueinander. Dabei soll eine Krafteinwirkung auf das erste Element durch das zweite Element bestimmt werden.

Kraftsensoren im entsprechenden Kraftbereich, d.h. << als 1 N sind im Stand der Technik bekannt. Es handelt sich meist um eigene Systeme, welche einen Footprint von mehreren Millimetern aufweisen.

Auch Piezoscanner mit einer Positionsauflösung im Nanometerbereich sind im Stand der Technik bekannt.

Eine Lösung wäre, zwei solcher Systeme zu kombinieren (Stack), um ein System zur präzisen Detektion von Kräften zu realisieren.

Ein gestapeltes System eines Scanners und einer Kraftsensorik würde jedoch einen großen Bauraum benötigen. Zudem wäre eine eigene Elektronik notwendig, um ausgelesen zu werden. Darüber hinaus würde ein gestapeltes System aus Scanner und Kraftsensorik zusätzliche Masse entweder zum Scanner (niedrigere Resonanzfrequenz) oder zum Messsystem (niedrigere Empfindlichkeit bei höheren Frequenzen) hinzufügen. Gleichzeitig müsste man bzgl. der Integration von Objekten, die zum Antasten verwendet werden, mit zwei Schnittstellen arbeiten, beispielsweise einer Lithographiemaske auf Kraftsensor auf Scanner oder einer Lithographiemaske auf Scanner auf Kraftmesseinheit.

Ein der vorliegenden Erfindung zugrundeliegendes Ziel ist es, ein kompaktes Scansystem bereitzustellen, welches sehr präzise Kräfte detektieren kann, die auf das Scansystem einwirken, ohne dabei auf zusätzliche Komponenten zu dem Bewegungssystem selbst zurückgreifen zu müssen.

Erfindungsgemäß wir nach einem ersten Aspekt eine taktile Sensorvorrichtung zum Inkontaktbringen von zwei Elementen vorgeschlagen, wie sie in Anspruch 1 definiert ist, nämlich eine taktile Sensorvorrichtung mit (1) einer Positionierungseinheit, die ausgestaltet ist, ein erstes Element linear entlang einer Antastrichtung zu positionieren, wobei die Positionierungseinheit aufweist: einen Endeffektor, der mit dem ersten Element verbindbar ist, und einen Positionssensor, der ausgestaltet ist, zumindest eine Änderung der Position des Endeffektors zu detektieren, und (2) einer Steuerung, wobei die Steuerung ausgestaltet ist, die Position des Endeffektors auf einen vordefinierten Sollwert zu regeln, eine Differenz eines Istwerts zu dem vordefinierten Sollwert der Position des Endeffektors zu bestimmen, eine Änderung der Differenz oder einer von der Differenz abhängigen Größe zu bestimmen und basierend auf der Änderung der Differenz oder der von der Differenz abhängigen Größe eine Krafteinwirkung durch ein zweites Element auf das mit dem Endeffektor verbundenen ersten Element zu bestimmen.

Erfindungsgemäß wird nach einem zweiten Aspekt ein Verfahren vorgeschlagen, wie es in Anspruch 13 definiert ist, nämlich ein Verfahren zur Bestimmung einer Krafteinwirkung auf ein erstes Element durch ein zweites Element, bevorzugt unter Verwendung der taktilen Sensorvorrichtung nach einem der vorstehenden Ansprüche, mit den Schritten: (i) Verbinden eines Endeffektors einer Positionierungseinheit mit einem ersten Element zur Positionierung des ersten Elements, (ii) Detektieren einer Änderung der Position des Endeffektors, (iii) Regeln einer Position des Endeffektors auf einen vordefinierten Sollwert, (iv) wiederholtes Bestimmen einer Differenz eines Istwerts zu dem vordefinierten Sollwert der Position des Endeffektors, (v) wiederholtes Bestimmen einer Änderung der Differenz oder einer von der Differenz abhängigen Größe und (vi) basierend auf der Änderung der Differenz oder der von der Differenz abhängigen Größe, Bestimmen einer Krafteinwirkung durch ein zweites Element auf das mit dem Endeffektor verbundene erste Element.

Erfindungsgemäß wird nach einem weiteren Aspekt ein Computerprogramm mit Programmmitteln vorgeschlagen, die eine taktile Sensorvorrichtung nach Anspruch 1 dazu veranlassen, die Schritte des erfindungsgemäßen Verfahrens nach Anspruch 13 auszuführen, wenn das Computerprogramm auf der taktilen Sensorvorrichtung ausgeführt wird. Das Computerprogramm kann auf einem geeigneten Speichermedium, etwa einem optischen Speichermedium oder einem nicht-flüchtigen elektronischen Speichermedium, vorgesehen, gespeichert und/oder vertrieben werden. Es kann auch zusammen mit oder als Teil einer Hardware-Komponente bereitgestellt werden. Das Computerprogramm kann auch auf andere Weise bereitgestellt werden, etwa über das Internet oder über drahtgebundene oder drahtlose Telekommunikationsmittel.

Durch die erfindungsgemäße taktile Sensorvorrichtung wird eine kompakte Positionierungseinheit bereitgestellt, welche sehr präzise Kräfte detektieren kann, die auf die Positionierungseinheit bzw. das zu positionierende Element einwirken, ohne dabei auf zusätzliche Komponenten zu der Positionierungseinheit selbst zurückgreifen zu müssen. D.h. die Kraftbestimmung wird direkt in die Positionierungseinheit integriert und damit der Bauraum nicht erhöht. Außerdem ist keine zusätzliche Hardware im Vergleich zu einem reinen Scansystem nötig - die zusätzliche Funktion kann rein softwarebasiert umgesetzt werden. Durch das Wegfallen zusätzlicher Komponenten wird der Aufbau des Gesamtsystems vereinfacht.

Die taktile Sensorvorrichtung ist zum Inkontaktbringen von zwei Elementen vorgesehen und eingerichtet.

Bei der taktilen Sensorvorrichtung handelt es sich um eine Positionierungseinheit, die ausgestaltet ist, zusätzlich zu der Positionierung eine Kraft zu bestimmen.

D.h. die taktile Sensorvorrichtung umfasst die Positionierungseinheit und eine Steuerung, die ausgestaltet ist, zusätzlich zu der Positionierung eine Krafteinwirkung zu bestimmen.

Die Positionierungseinheit ist ausgestaltet, ein erstes Element linear entlang einer Antastrichtung zu positionieren. D.h. die Positionierungseinheit kann das Element in eine Dimension bewegen, die einer Antastrichtung entspricht. Dabei ist die Antastrichtung diejenige Richtung, die sich das erste Element auf das zweite Element zubewegt. Die Terme "erstens" und "zweitens" dienen hier lediglich der Unterscheidung der Elemente und sind nicht als einschränkend zu verstehen Eine Position des Elements kann dabei direkt oder indirekt, d.h. über ein anderes zu dem Element relativ angeordneten Objekt, detektiert werden. Eine Position des Elements kann dabei auch einer Position eines Abschnitts des Elements entsprechen.

Die Positionierungseinheit weist einen Endeffektor und einen Positionssensor auf.

Der Endeffektor ist mit dem ersten Element verbunden, insbesondere lösbar verbunden. Weiter ist der Endeffektor beweglich, bevorzugt linear beweglich, insbesondere zu dem zweiten Element ausgestaltet. Der Endeffektor weist (naturgemäß) eine vordefinierte Federkonstante ungleich null auf, d.h. ist ausgestaltet, eine Kraft, die einen von der vordefinierten Federkonstanten abhängigen Wert nicht überschreitet, zu absorbieren. Anders ausgedrückt umfasst der Endeffektor eine externe Federkonstante, d.h. der Endeffektor ist ausgestaltet, eine Kraft, die einen von der vordefinierten Federkonstanten abhängigen Wert nicht überschreitet, zu absorbieren.

Der Positionssensor ist ausgestaltet, zumindest eine Änderung der Position des Endeffektors zu detektieren. Bevorzugt ist der Positionssensor ausgestaltet, eine absolute Position des Endeffektors zu detektieren.

Wie bereits angegeben, weist die taktile Sensorvorrichtung eine Steuerung auf, die zur Bestimmung einer Krafteinwirkung ausgestaltet ist. Die Steuerung kann dabei auch als Steuerung der Positionierungseinheit verstanden werden, d.h. entspricht der Steuerung einer Positionierungseinheit mit den weiteren Schritten für die Bestimmung der Krafteinwirkung.

Die Steuerung ist ausgestaltet, die Position des Endeffektors auf einen vordefinierten Sollwert zu regeln. D.h. entspricht ein Istwert der Position des Endeffektors nicht dem vordefinierten Sollwert (oder einem Bereich um den Sollwert), wird die Position des Endeffektors angepasst, bis der Istwert der Position wieder dem Sollwert entspricht (oder in dem Bereich um den Sollwert liegt).

Weiter ist die Steuerung ausgestaltet, eine Differenz eines Istwerts zu dem vordefinierten Sollwert der Position des Endeffektors zu bestimmen. Dabei ist die Steuerung bevorzugt ausgestaltet, die Differenz zu überwachen, d.h. wiederholt zu bestimmen. Die Steuerung ist zudem bevorzugt ausgestaltet, eine Änderung der Differenz zu bestimmen, d.h. eine Änderung der Differenz über die Zeit zu bestimmen. Bei wiederholtem Bestimmen der Differenz kann entsprechend eine Änderung der Differenz über die Zeit bestimmt werden. Zusätzlich oder alternativ ist die Steuerung ausgestaltet, eine Änderung einer von der Differenz abhängigen Größe zu bestimmen.

Die Steuerung ist weiter ausgestaltet, basierend auf der Änderung der Differenz oder der von der Differenz abhängigen Größe eine Krafteinwirkung durch ein zweites Element auf das mit dem Endeffektor verbundene erste Element zu bestimmen. Dabei kann die Bestimmung basierend auf der Änderung der Differenz und/oder basierend auf einer Änderung einer von der Differenz abhängigen Größe bestimmt werden. Dabei ist bevorzugt die Steuerung ausgestaltet, die Änderung mit einem vordefinierten Sollwert für die Änderung zu vergleichen und zu bestimmen, dass eine Krafteinwirkung auf das Element vorliegt, wenn der vordefinierte Sollwert von der Änderung, d.h. einem Wert der Änderung, überschritten wird. D.h. eine Kraftbestimmung liegt auch vor, wenn bestimmt wird, dass eine Kraft wirkt, ohne dass auch bestimmt wird, wie groß eine derartige Kraft ist. Die Änderung der Differenz kann auch als erste Ableitung der Differenz (oder einer von der Differenz abhängigen Größe) verstanden werden.

In einer vorteilhaften Ausgestaltung eines Aspekts der Erfindung ist die Steuerung ausgestaltet, als die Änderung eine Ableitung, insbesondere eine zweite Ableitung, der Größe zu bestimmen. Dann ist weiter bevorzugt, dass eine Krafteinwirkung auf das erste Element bestimmt wird, wenn ein Wert der (zweiten) Ableitung einen Schwellwert übersteigt. Insbesondere kann ein Sprung der Differenz in der zweiten Ableitung als eine Delta-Funktion identifiziert werden, wodurch eine Krafteinwirkung besonders einfach erkannt werden kann.

In einer weiteren vorteilhaften Ausgestaltung eines Aspekts der Erfindung weist die Positionierungseinheit einen Aktuator auf, um den Endeffektor zu positionieren. Dann ist die Steuerung bevorzugt ausgestaltet, den Aktuator anzusteuern. Besonders bevorzugt ist die Steuerung dann ausgestaltet, basierend auf der Differenz einen Stellwert für den Aktuator zu berechnen und an den Aktuator auszugeben. Weiter ist die Steuerung dann besonders bevorzugt ausgestaltet, eine Änderung des Stellwerts zu bestimmen und basierend auf der Änderung des Stellwerts eine Krafteinwirkung auf das erste Element zu bestimmen. Bevorzugt ist der Aktuator ein Piezoaktuator. Besonders bevorzugt wird ein Verstärker, beispielsweise ein Lock-In-Verstärker verwendet, um den Stellwert vor Ausgeben an den Aktuator zu verstärken.

In einer vorteilhaften Variante der obigen Ausgestaltung weist die Steuerung einen PID-Regler auf. Dann ist die Steuerung bevorzugt ausgestaltet, den Stellwert des Aktuators, beispielsweise des Piezoaktuators, mit dem PID-Regler zu bestimmen. Dies ist eine besonders einfache Variante zur Ausgestaltung der Steuerung.

In einer weiteren vorteilhaften Ausgestaltung eines Aspekts der Erfindung wird der Kontakt zwischen dem ersten Element und dem zweiten Element über einen Punktkontakt dargestellt. Anders ausgedrückt ist zwischen dem ersten Element und dem zweiten Element ein Punktkontakt vorgesehen, über den sich das erste Element und das zweite Element berühren (können). Bevorzugt ist eine Berührung des ersten Elements und des zweiten Elements nur über den Punktkontakt möglich. Ein Punktkontakt kann beispielsweise über eine Halbkugel oder eine Nadel/Spitze realisiert werden.

In einer weiteren vorteilhaften Ausgestaltung eines Aspekts der Erfindung ist die Steuerung ausgestaltet, die Position des Endeffektors periodisch zu modulieren. Anders ausgedrückt kann die Position des Endeffektors zu dem zweiten Element periodisch verändert werden, d.h. die Steuerung ist ausgestaltet, die Position des Endeffektors zu dem zweiten Element periodisch zu verändern. In diesem Fall ist zum Beispiel der oben genannte Lock-In Verstärker bevorzugt.

In einer weiteren vorteilhaften Ausgestaltung eines Aspekts der Erfindung weist die taktile Sensorvorrichtung zumindest einen Linearpositionierer auf, wobei der Linearpositionierer zum Positionieren der Positionierungseinheit und/oder des zweiten Elements ausgestaltet ist. Dann ist die Steuerung vorzugsweise weiter ausgestaltet, die Position des Linearpositionierers auf einen vordefinierten Sollwert zu regeln. Bevorzugt ist eine Reglerschleife für die Position des Endeffektors geschlossen. Zusätzlich oder alternativ kann auch eine Reglerschleife der Position des Linearpositionierers geschlossen sein.

Der Linearpositionierer ist ausgestaltet, die Positionierungseinheit und/oder das zweite Element linear zu positionieren. Insbesondere ist die Positionierungseinheit und/oder das zweite Element auf dem Linearpositionierer positioniert und kann durch eine Bewegung des Linearpositionierers bewegt werden. Beispielsweise ist der Linearpositionierer ein Stick-Slip-Linearpositionierer, d.h. der Linearpositionierer ist ausgestaltet für eine Vortriebsphase und eine Rückstellphase. Dabei ist die Steuerung bevorzugt ausgestaltet, die Position des Linearpositionierers bzw. im Fall von zwei Linearpositionierern die Position des einen oder beider Linearpositionierer auf einen vordefinierten Sollwert zu regeln.

In einem Fall, in dem der Kontakt zwischen dem ersten Element und dem zweiten Element über einen Punktkontakt dargestellt wird, ist die Steuerung besonders bevorzugt ausgestaltet, das erste Element und das zweite Element orthogonal zur Antastrichtung zueinander zu positionieren und daraus ein Höhenprofil einer Ebene des zweiten Elements zu erstellen.

Nach einem anderen Aspekt der Erfindung wird eine inkrementelle Messeinrichtung mit einer taktilen Sensorvorrichtung nach einer der oben oder unten beschriebenen Ausführungsform und einer Messeinheit vorgeschlagen, wobei die taktile Sensorvorrichtung zur Referenzierung der inkrementellen Messeinrichtung vorgesehen und eingerichtet ist. Dabei umfasst die Messeinheit das erste Element bzw. entspricht die Messeinheit dem ersten Element. Weiter ist die Steuerung dann ausgestaltet, einen Abstand zwischen dem ersten Element und dem zweiten Element, d.h. zwischen der Messeinheit und dem zweiten Element, zu bestimmen.

In einer bevorzugten Variante dieses Aspekts der Erfindung ist die Messeinrichtung eine optische Messeinheit. Beispielsweise umfasst die Messeinheit in diesem Fall ein Interferometer oder einen optischen Encoder. D.h. die Steuerung ist ausgestaltet, den Abstand zwischen dem Interferometer oder dem optischen Encoder und dem zweiten Element zu bestimmen.

Im Fall eines Interferometers umfasst die inkrementelle Messeinrichtung einen zu dem Endeffektor beweglichen Spiegel. Der Spiegel ist bevorzugt an dem Endeffektor positioniert, so dass er durch den beweglichen Endeffektor beweglich ist. Das Interferometer ist dann ausgestaltet, zumindest eine Änderung der Position des Spiegels zu messen und damit eine Änderung der Position des Endeffektors. Weiter ist die Steuerung bevorzugt ausgestaltet, basierend auf der Messung durch das Interferometer die Position des Spiegels und damit des Endeffektors zu regeln. Ein Interferometer ermöglicht eine besonders genaue Regelung des Spiegels bzw. des Endeffektors.

Nach einem weiteren Aspekt der Erfindung wird ein System mit drei taktilen Sensorvorrichtungen jeweils nach einer der oben oder unten beschriebenen Ausführungsformen zur Ausrichtung von zwei ebenen Elementen vorgeschlagen. Dadurch können zwei flächige Elemente zueinander ausgerichtet werden. Dabei sind bevorzugt drei Punktkontakte vorgesehen, wobei sich die Punktkontakte örtlich nahe des Endeffektors der zugehörigen taktilen Sensorvorrichtung befinden. "Nahe" bedeutet hier, dass sich die Punktkontakte jeweils innerhalb eines Radius von 20 % eines Abstands zum nächsten Punktkontakt zu dem zugehörigen Endeffektor befinden.

Merkmale vorteilhafter Ausführungsformen der Erfindung sind insbesondere in den Unteransprüchen definiert, wobei weitere vorteilhafte Merkmale, Ausführungen und Ausgestaltungen für den Fachmann zudem aus der obigen Erläuterung und der folgenden Diskussion zu entnehmen sind.

Im Folgenden wird die vorliegende Erfindung anhand von in den Figuren dargestellten Ausführungsbeispielen weiter illustriert und erläutert. Hierbei zeigt
Fig. 1 eine schematische Darstellung zur Illustration eines ersten Ausführungsbeispiels der taktilen Sensorvorrichtung,
Fig. 2 eine schematische Darstellung zur Illustration eines zweiten Ausführungsbeispiels der taktilen Sensorvorrichtung,
Fig. 3 eine schematische Darstellung zur Illustration eines Aufbaus zur Vermessung der Kraftempfindlichkeit der taktilen Sensorvorrichtung,
Fig. 4 eine schematische Darstellung zur Illustration von Messergebnissen unter Verwendung des Aufbaus aus Fig. 3,
Fig. 5 eine schematische Darstellung zur Illustration eines dritten Ausführungsbeispiels der taktilen Sensorvorrichtung und
Fig. 6 ein schematisches Ablaufdiagramm eines Ausführungsbeispiels des erfindungsgemäßen Verfahrens zur Kraftbestimmung.

In den beiliegenden Zeichnungen sowie den Erläuterungen zu diesen Zeichnungen sind einander entsprechende bzw. in Beziehung stehende Elemente - soweit zweckdienlich - mit jeweils entsprechenden oder ähnlichen Bezugszeichen gekennzeichnet, auch wenn sie in unterschiedlichen Ausführungsbeispielen zu finden sind.

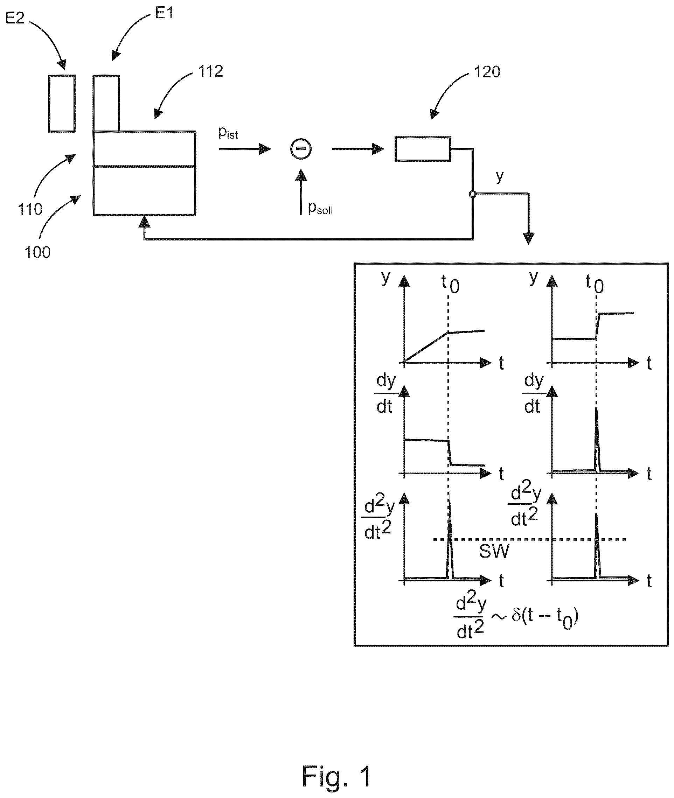

Fig. 1 zeigt eine schematische Darstellung zur Illustration eines ersten Ausführungsbeispiels der taktilen Sensorvorrichtung.

Die taktile Sensorvorrichtung 100 ist zum Inkontaktbringen von zwei Elementen E1, E2 vorgesehen und eingerichtet. Die taktile Sensorvorrichtung 100 umfasst eine Positionierungseinheit 110 und eine Steuerung 120.

Die Positionierungseinheit 110 ist ausgestaltet, das erste Element E1 linear zu positionieren. Die Positionierungseinheit 110 weist einen Endeffektor 112 und einen Positionssensor auf.

Der Endeffektor 112 ist mit dem ersten Element E1 verbunden, insbesondere lösbar verbunden. Insbesondere ist das erste Element E1 auf dem Endeffektor positioniert. Der Endeffektor 112 ist beweglich zu dem zweiten Element E2. Weiter weist der Endeffektor 112 (naturgemäß) eine vordefinierte Federkonstante k_{sys} ungleich null auf. Der Positionssensor ist ausgestaltet, zumindest eine Änderung der Position des Endeffektors 112 zu detektieren.

Die Steuerung 120 ist ausgestaltet, die Position des Endeffektors 112 auf einen vordefinierten Sollwert psoll zu regeln. Weiter ist die Steuerung 120 ausgestaltet, eine Differenz eines Istwerts pist zu dem vordefinierten Sollwert psoll der Position des Endeffektors 112 zu bestimmen, eine Änderung der Differenz bzw. einer von der Differenz abhängigen Größe zu bestimmen und basierend auf der Änderung eine Krafteinwirkung durch das zweite Element E2 auf das mit dem Endeffektor 112 verbundene erste Element E1 zu bestimmen.

Insbesondere ist die Steuerung 120 ausgestaltet, als Änderung eine zweite Ableitung zu bestimmen, wobei eine Krafteinwirkung auf das erste Element E1 bestimmt wird, wenn ein Wert der zweiten Ableitung einen Schwellwert übersteigt.

Bewegt sich der Endeffektor 112 aktiv gegen eine externe Berührkraft, d.h. wenn sich das erste Element E1 und das zweite Element E2 berühren, ändert sich die Steigung eines Werts y, der der Änderung der Differenz bzw. einer von der Differenz abhängigen Größe entspricht, zum Zeitpunkt t0 schlagartig, was zu einer Sprungfunktion in der ersten Ableitung (dy/dt) und zu einer Delta-Funktion in der zweiten Ableitung (d2y/dt2) führt.

Eine jeweilige Auftragung des y-Werts gegenüber der Zeit t (x-Achse) ist unten in Fig. 1 zu sehen. Insgesamt sind sechs Graphen gezeigt, wobei die linken Graphen den y-Wert für einen aktiv bewegenden Endeffektor 112 zeigen und die rechten Graphen den y-Wert für einen stehenden Endeffektor 112 zeigen. Bewegt sich der Endeffektor 112 aktiv gegen eine externe Berührkraft, die der Endeffektor 112 durch die Federkonstante k_{sys} erfährt, ändert sich die Steigung des y-Werts zum Zeitpunkt t₀ schlagartig, was zu einer Sprungfunktion in der ersten Ableitung (dy/dt) und zu einer Delta-Funktion in der zweiten Ableitung (d²y/dt²) führt. Die Berührung kann somit über einen Schwellwert SW in der zweiten Ableitung detektiert werden.

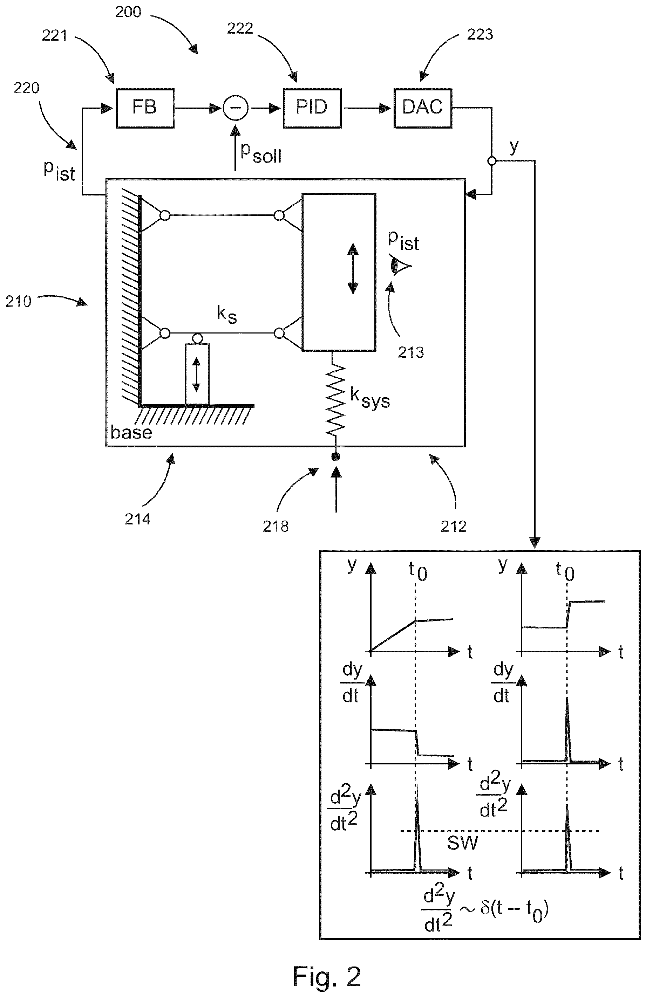

Fig. 2 zeigt eine schematische Darstellung zur Illustration eines zweiten Ausführungsbeispiels der taktilen Sensorvorrichtung.

Die taktile Sensorvorrichtung 200 umfasst eine Positionierungseinheit 210 und eine Steuerung 220.

Die Positionierungseinheit 210 ist ausgestaltet, ein Element linear zu positionieren. Die Positionierungseinheit 210 weist einen Endeffektor 212 und einen Positionssensor 213 auf.

Der Endeffektor 212 ist ausgestaltet, das Element linear zu positionieren. Dafür ist der Endeffektor 212 beweglich ausgestaltet. Weiter weist der Endeffektor 212 (naturgemäß) eine vordefinierte Federkonstante k_{sys} ungleich null auf. Der Positionssensor 213 ist ausgestaltet, zumindest eine Änderung der Position des Endeffektors 212 zu detektieren.

Der Endeffektor 212 weist in der gezeigten Ausführungsform einen Aktuator 214, bevorzugt einen Piezoaktuator, auf, um den Endeffektor 212 und damit das Element zu positionieren. Der Aktuator kann über eine nachgiebige Führungsstruktur kₛ bzw. einen Hebelarm mit dem Endeffektor 212 verbunden sein.

Die Steuerung 220 ist ausgestaltet, die Position des Endeffektors 212 auf einen vordefinierten Sollwert pₛₒₗₗ zu regeln. Dafür wird vorliegend ein Positionsfeedback 221 verwendet. Weiter ist die Steuerung 220 ausgestaltet, eine Differenz eines Istwerts pᵢₛₜ zu dem vordefinierten Sollwert pₛₒₗₗ der Position des Endeffektors 212 zu bestimmen, eine Änderung der Differenz oder einer von der Differenz abhängigen Größe zu bestimmen und basierend auf der Änderung eine Krafteinwirkung auf das Element zu bestimmen.

Insbesondere ist die Steuerung 220 ausgestaltet, als Änderung eine zweite Ableitung zu bestimmen, wobei eine Krafteinwirkung auf das Element bestimmt wird, wenn ein Wert der zweiten Ableitung einen Schwellwert übersteigt.

In der vorliegenden Ausführungsform wird der Endeffektor 212 durch einen Aktuator 214 angetrieben. Die Steuerung 220 ist ausgestaltet, basierend auf der Differenz einen Stellwert für den Aktuator 214 zu berechnen und an den Aktuator 214 auszugeben. D.h. vorliegend ist die Steuerung 220 ausgestaltet, eine Änderung einer von der Differenz abhängigen Größe, d.h. dem Stellwert des Aktuators 214, zu bestimmen und weiter basierend auf der Änderung des Stellwerts eine Krafteinwirkung auf das Element zu bestimmen.

Bevorzugt ist die Steuerung 220 ausgestaltet, die Position des Endeffektors 212 periodisch zu regeln. Dann ist bevorzugt ein Lock-In Verstärker vorgesehen, der ein Ausgangssignal verstärkt. Weiter ist bevorzugt die Steuerung 220 ausgestaltet, die Position des Endeffektors 212 auf einen vordefinierten Sollwert zu regeln. Eine Reglerschleife für die Position des Endeffektors 212 ist dabei bevorzugt geschlossen.

Vorliegend weist die Steuerung 220 einen PID-Regler 222 auf und ist ausgestaltet, den Stellwert des Aktuators 214 mit dem PID-Regler 222 zu bestimmen. Der Stellwert für den Aktuator 214 wird dann von der Steuerung 220 als DAC-Wert 223 (Digital-Analog-Converter) ausgegeben. Insbesondere wird der DAC-Wert 223 über einen Verstärker, zum Beispiel bei Modulation des Eingangssignals, über einen Lock-In Verstärker, an den Aktuator 214 gegeben.

Eine jeweilige Auftragung des DAC-Werts (y-Achse) gegenüber der Zeit t (x-Achse) ist unten in Fig. 2 zu sehen. Insgesamt sind wiederum sechs Graphen gezeigt, wobei die linken Graphen den DAC-Wert für einen aktiv bewegenden Endeffektor 212 zeigen und die rechten Graphen den DAC-Wert für einen stehenden Endeffektor 212 zeigen.

Bewegt sich der Endeffektor 212 aktiv gegen eine externe Berührkraft 218, die der Endeffektor 212 durch die Federkonstante k_{sys} erfährt, ändert sich die Steigung des DAC-Werts (y) zum Zeitpunkt t₀ schlagartig, was zu einer Sprungfunktion in der ersten Ableitung (dy/dt) und zu einer Delta-Funktion in der zweiten Ableitung (d²y/dt²) führt. Die Berührung kann somit über einen Schwellwert SW in der zweiten Ableitung des DAC-Werts detektiert werden.

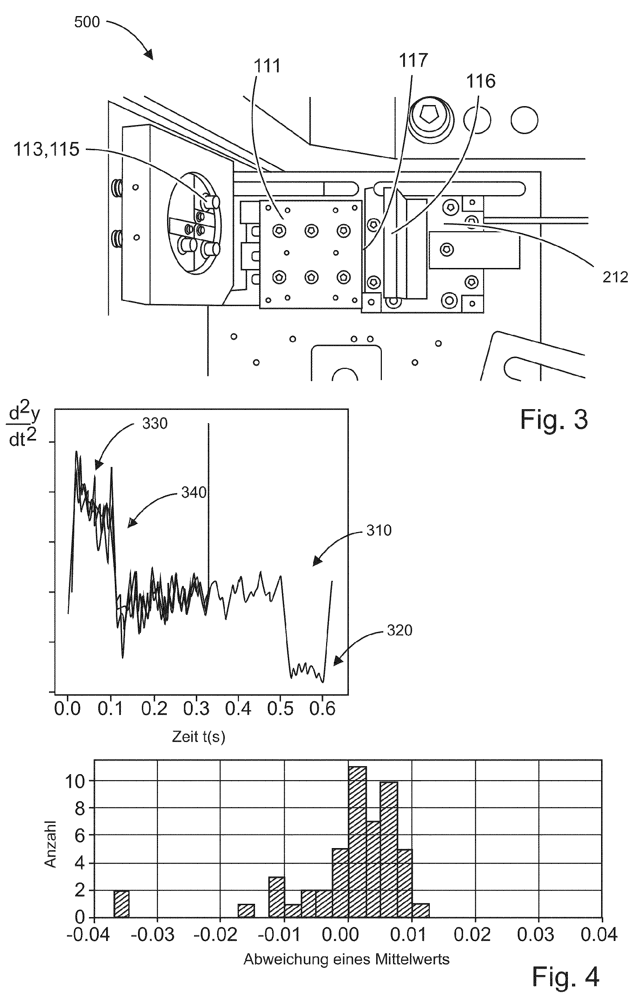

Fig. 3 zeigt eine schematische Darstellung zur Illustration eines Aufbaus 500 zur Vermessung der Kraftempfindlichkeit der taktilen Sensorvorrichtung. Die Sensorvorrichtung kann dem zweiten Ausführungsbeispiel entsprechen.

In Fig. 3 ist ein Interferometer 115 und ein Spiegel 116 vorgesehen, wobei der Spiegel 116 an dem Endeffektor 212 positioniert und über den Endeffektor 212 zu einem Linearpositionierer 111 beweglich ist, auf dem ein Element, zum Beispiel das zweite Element E2, positioniert werden kann. Das Interferometer 115 ist ausgestaltet, zumindest eine Änderung der Position des Spiegels 116 und damit eine Änderung der Position des Endeffektors 212 zu messen. In diesem Fall ist die Steuerung 220 ausgestaltet, basierend auf der Messung durch das Interferometer 115 die Position des Spiegels 116 und damit die Position des Endeffektors 112 zu regeln.

Weiter ist zwischen dem Endeffektor 212 und dem Linearpositionierer 111 ein Punktkontakt 117 vorgesehen, über den der Endeffektor 212 mit dem Linearpositionierer 111 kontaktieren kann.

Der Linearpositionierer 111 ist in der gezeigten Ausführungsform als ein Stick-Slip Linearpositionierer ausgeführt.

Fig. 4 zeigt eine schematische Darstellung zur Illustration von Messergebnissen unter Verwendung des Aufbaus aus Fig. 3.

Wie bereits erläutert, regelt der Endeffektor 212 seine Sollposition. Zu Beginn einer Messung wird ein Kontakt über den Punktkontakt 117 zwischen dem Endeffektor 212 und dem Linearpositionierer 111, welcher seine Position ebenfalls selbst regelt, hergestellt. Der Endeffektor 212 wird nun zurückgefahren, so dass der Punktkontakt 117 aufgelöst wird. Daraufhin fährt der Endeffektor 212, in diesem Beispiel mit einer Geschwindigkeit von 100 µm/s, vorwärts, bis eine Berührung zum Linearpositionierer 111 in der zweiten Ableitung des DAC-Werts 123 detektiert wird und die Bewegung des Endeffektors 212 gestoppt wird. Durch den Vergleich mehrerer Wiederholungen 340 bei gleichbleibender Berührobjektposition kann eine Wiederholbarkeit der Berührungskennung gemessen werden (oben in Fig. 4, wobei in dem Graphen 310 das Berührobjekt zur Referenz entfernt wurde. Die Plateaus 320, 330 am Anfang und Ende der Bewegung stammen von einer konstanten Anfahrtbeschleunigung und werden über eine Totzeit unterdrückt, damit die Berührerkennung nicht fälschlicherweise auslöst.

Durch die hohe Präzision des Antriebs und der Sensorik wird eine Breite der Verteilung von ca. 20 nm gemessen (unten in Fig. 4, dargestellt als Histogramm der verschiedenen finalen Positionen nach der Stopperkennung gemessen über das Interferometer 115).

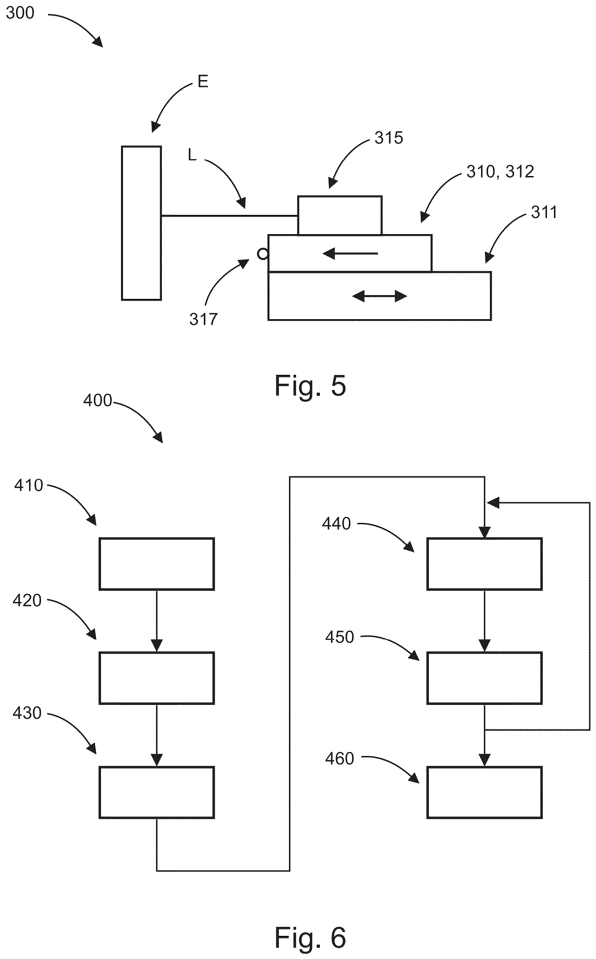

Fig. 5 zeigt eine schematische Darstellung zur Illustration eines dritten Ausführungsbeispiels der taktilen Sensorvorrichtung für eine weitere Anwendung.

Die taktile Sensorvorrichtung 300 umfasst wiederum eine Positionierungseinheit 310 und eine Steuerungseinheit 320, die im Weiteren im Zusammenhang mit Fig. 5 nicht weiter erläutert wird und im Wesentlichen einer der Steuerungseinheiten 120, 220 entsprechen kann.

Die Positionierungseinheit 310 umfasst einen Linearpositionierer 311 und einen Endeffektor 312. Auf dem Endeffektor ist ein Laserinterferometer(-kopf) 315 angeordnet, der einen Laserstrahl L in Richtung eines Elements E, welches als das zweite Element E2 verstanden werden kann, ausstrahlt. Der Endeffektor 312 weist einen Punktkontakt 317 auf, um mit dem Element E in Kontakt zu treten.

Die gezeigte Sensorvorrichtung 300 kann beispielsweise zur absoluten Positionsbestimmung eines Elements E verwendet werden, so dass eine Absolutreferenz für das Interferometer 315 zum Beispiel für eine inkrementelle Messung bestimmt werden kann.

Dafür wird der Endeffektor 312 über den Linearpositionierer 311 in einen Stellwegabstand des Endeffektors 312 zu dem Element E gebracht. Über die Bestimmung einer Krafteinwirkung, wie sie oben beschrieben wird, kann dann die genaue Position des Elements E ermittelt werden.

Fig. 6 zeigt ein schematisches Ablaufdiagramm eines Ausführungsbeispiels des erfindungsgemäßen Verfahrens zur Kraftbestimmung.

Das Verfahren 400 wird zur Bestimmung einer Krafteinwirkung auf ein erstes Element durch ein zweites Element, bevorzugt unter Verwendung der taktilen Sensorvorrichtung nach einer der obigen Ausgestaltungen, verwendet.

Das Verfahren 400 umfasst zumindest die folgenden Schritte, wobei die Schritte nicht notwendiger in der beschriebenen Reihenfolge bzw. lediglich jeweils nur einmal ausgeführt werden:

In einem Schritt 410 wird ein erstes Element mit einem Endeffektor einer Positionierungseinheit zur Positionierung des ersten Elements verbunden, insbesondere lösbar verbunden.

In einem zweiten Schritt 420 wird eine Änderung der Position des Endeffektors detektiert.

In einem weiteren Schritt 430 wird eine Position des Endeffektors auf einen vordefinierten Sollwert geregelt.

In einem vierten Schritt 440 wird wiederholt eine Differenz eines Istwerts zu dem vordefinierten Sollwert der Position des Endeffektors bestimmt, wobei weiter in einem fünften Schritt 450 wiederholt eine Änderung der Differenz oder einer von der Differenz abhängigen Größe bestimmt wird.

In einem sechsten Schritt 460 wird dann basierend auf der Änderung der Differenz oder der von der Differenz abhängigen Größe eine Krafteinwirkung durch ein zweites Element auf das mit dem Endeffektor verbundene erste Element bestimmt.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden.

In Implementierungen der Erfindung können jeweils einzelne Komponenten, z.B. ein Prozessor, ganz oder teilweise die Funktionen verschiedener in den Ansprüchen genannter Elemente übernehmen. Abläufe oder Vorgänge können als Programmmittel eines Computerprogramms und/oder als spezielle Hardwarekomponenten implementiert werden.

Es folgen weitere Überlegungen zu der Erfindung:
Die Erfindung bezieht sich auf ein hochauflösendes taktiles Messverfahren für Nanopositioniersysteme ohne separate Kraftsensorik.

Diese ist insbesondere zur präzisen Ausrichtung zweier Ebenen zueinander wichtig. Eine Möglichkeit, dies zu erreichen, ist ein hochaufgelöstes Antasten mittels eines Kraftsensors. Die grundsätzliche Idee der Erfindung entstand beim Versuch der Erfinder ein sehr kompaktes und hochauflösendes Kraftmesssystem in ein vorhandenes Scanbewegungssystem, kurz: Scansystem, zu integrieren. Ein hochauflösendes Kraftmesssystem kann über eine (definierte) Federkonstante gepaart mit einer hochauflösenden Positionsmessung realisiert werden. Beide benötigten Komponenten sind bereits in einem Scanbewegungssystem, welches als Piezoscanner realisiert sein kann, integriert. Das kompakteste Kraftmesssystem, welches in ein Scansystem integriert werden kann, ist also, das Scansystem selbst für die Kraftmessung zu nutzen, ohne den grundsätzlichen Nutzen des Scansystems einzuschränken.

Die Erfindung soll im Bereich der Präzisionssensorik und Antriebstechnik (Nanometer-Skala) verwendet werden. Außerdem ist die Erfindung als Antastmechanismus für u.a. automatisierte Montagemaschinen oder Koordinatenmessmaschinen verwendbar.

Der Zweck der Erfindung ist die Möglichkeit, sehr präzise Kräfte zu detektieren, die auf ein Scansystem einwirken, ohne dabei auf zusätzliche Komponenten außer dem Bewegungssystem selbst zurückgreifen zu müssen. Dadurch bleibt das Scansystem sehr kompakt.

Der Kerngedanke ist, als Kraftsensor das Scansystem selbst in Kombination mit einer externen Federkonstante zu nutzen und dabei Abweichungen, beispielsweise des internen Stellwerts (DAC) eines Aktors von einer Bewegung, ohne externe Krafteinwirkung zu detektieren. Dabei wird das Scansystem selbst bei konstanter Position gehalten oder linear verfahren - in beiden Fällen ist die Reglerschleife bevorzugt geschlossen und beispielsweise der Stellwert des Aktors betrachtet. Wirkt eine externe Kraft auf das Scansystem ein, verschiebt sich der Endeffektor des Scansystems - die geschlossene Reglerschleife sorgt aber durch Anpassung des Stellwerts dafür, dass die (geregelte) Sollposition gehalten wird. Da die detektierte Kraft sehr klein ist, kann diese vom Scansystem selbst aufgebracht werden und wird in der externen Federkonstante absorbiert. Durch die kalibrierte Detektion der Veränderung des Stellwerts kann so die einwirkende Kraft mit dem Scansystem selbst detektiert werden, ohne den positionsgeregelten Betrieb zu unterbrechen.

Durch das intrinsische Vorhandensein eines Scansystems kann das System eine Bewegung ausführen, welche von einer Kraftdetektion getriggert wurde. Das System kann beispielsweise zurückspringen, um eine empfindliche Probe zu schützen. Des Weiteren kann das System einer linearen Trajektorie folgen, der eine periodische Bewegung aufmoduliert wurde. So kann periodisch angetastet werden und signalverstärkende Techniken wie Lock-In Verstärkung genutzt werden, um die Kraftdetektionsgenauigkeit zu erhöhen.

Durch die direkte Integration der Kraftdetektion in das Scansystem wird der Bauraum nicht erhöht und es ist keine zusätzliche Hardware im Vergleich zu einem reinem Scansystem nötig - die zusätzliche Funktion kann rein softwarebasiert umgesetzt werden. Durch das Wegfallen zusätzlicher Komponenten wird der Aufbau des Gesamtsystems vereinfacht. Zusätzlich wird die bewegte Masse für die Messung und Bewegung auf ein Minimum reduziert, so dass die Resonanzfrequenz des Bewegungssystems mit Nutzlast sehr hoch sein kann (hohe Steifigkeit des Sensors) und auch das Messsystem bei hohen Frequenzen noch sehr empfindlich ist. Auch die Integration verschiedener Nutzlasten ist durch die Wahl eines geeigneten Adapters sehr einfach, da durch die direkte Integration der Sensorik in das Bewegungssystem selbst eine Schnittstelle eingespart werden kann.

In einem konkreten Ausführungsbeispiel wird ein Piezoscanner Positionierer in Position gehalten und das Einwirken einer äußeren Kraft wird detektiert. Dazu wird die Abweichung der gemessenen Ist-Position von der Soll-Position mittels Positionsfeedback (FB) nachgeregelt. Der Stellwert für den Piezoaktuator wird von der Steuerung mittels PID-Regelung als DAC-Wert (Digital-Analog-Converter) ausgegeben und über einen Verstärker auf den Piezoaktuator gegeben. Bewegt sich der Scanner nun aktiv gegen eine externe Berührkraft, die über die Federkonstante an den Scanner Endeffektor gekoppelt ist, ändert sich die Steigung des DAC-Werts mit der Zeit schlagartig, was zu einer Sprungfunktion in der ersten Ableitung und zu einer Delta-Funktion in der zweiten Ableitung führt. Die Berührung kann somit über einen Schwellwert in der zweiten Ableitung detektiert werden.

In einer beispielhaften Messung wird die Position des Scanner-Endeffektors mit Hilfe eines Picoscale Interferometers, d.h. eines Interferometers mit Pikometer-Präzision, gemessen. Der Scanner selbst regelt seine Sollposition auf einen intern verbauten Nanosensor. Zu Beginn der Messung wird ein Punktkontakt zwischen dem Scanner-Endeffektor und einem Stick-Slip Linearpositionierer hergestellt, welcher seine Position selbst intern mit Nanometerpräzision regelt. Der Scanner-Endeffektors wird nun zurückgefahren, so dass der Punktkontakt aufgelöst wird. Daraufhin fährt der Scanner-Endeffektors mit einer Geschwindigkeit von beispielsweise 100 µm/s vorwärts, bis eine Berührung zum Stick-Slip Linearpositionierer in der zweiten Ableitung des DAC Werts detektiert wird und die Bewegung des Scanner-Endeffektors gestoppt wird. Durch den Vergleich mehrerer Wiederholungen bei gleichbleibender Berührobjektposition kann eine Wiederholbarkeit der Berührungskennung gemessen werden. Durch die hohe Präzision des Antriebs und der Sensorik wird eine Breite der Verteilung von ca. 20 nm gemessen.

Die Erfindung betrifft eine taktile Sensorvorrichtung zum Inkontaktbringen von zwei Elementen mit (1) einer Positionierungseinheit, die ausgestaltet ist, ein erstes Element linear entlang einer Antastrichtung zu positionieren, wobei die Positionierungseinheit aufweist: einen Endeffektor, der mit dem ersten Element verbunden ist, und einen Positionssensor, der ausgestaltet ist, zumindest eine Änderung der Position des Endeffektors zu detektieren, und (2) einer Steuerung, wobei die Steuerung ausgestaltet ist, die Position des Endeffektors auf einen vordefinierten Sollwert zu regeln, eine Differenz eines Istwerts zu dem vordefinierten Sollwert der Position des Endeffektors zu bestimmen, eine Änderung der Differenz oder einer von der Differenz abhängigen Größe zu bestimmen und basierend auf der Änderung der Differenz oder der von der Differenz abhängigen Größe eine Krafteinwirkung durch ein zweites Element auf das mit dem Endeffektor verbundenen ersten Element zu bestimmen.

## Patentansprüche

1. Taktile Sensorvorrichtung (100, 200, 300) zum Inkontaktbringen von zwei Elementen (E1 und E2), mit
einer Positionierungseinheit (110, 210, 310), die ausgestaltet ist, ein erstes Element (E1) linear entlang einer Antastrichtung zu positionieren, wobei die Positionierungseinheit (110, 210, 310) aufweist:
einen Endeffektor (112, 212), der mit dem ersten Element (E1) verbindbar ist, und
einen Positionssensor (213), der ausgestaltet ist, zumindest eine Änderung der Position des Endeffektors (112, 212) zu detektieren, und
einer Steuerung (120, 220), wobei die Steuerung (120, 220) ausgestaltet ist,
die Position des Endeffektors (112, 212) auf einen vordefinierten Sollwert (pₛₒₗₗ) zu regeln,
eine Differenz eines Istwerts (pᵢₛₜ) zu dem vordefinierten Sollwert (pₛₒₗₗ) der Position des Endeffektors (112, 212) zu bestimmen,
eine Änderung der Differenz oder einer von der Differenz abhängigen Größe (y) zu bestimmen und
basierend auf der Änderung der Differenz oder der von der Differenz abhängigen Größe (y) eine Krafteinwirkung durch ein zweites Element (E2) auf das mit dem Endeffektor verbundene erste Element (E1) zu bestimmen.

2. Taktile Sensorvorrichtung (100, 200, 300) nach Anspruch 1,
wobei die Steuerung (120, 220) ausgestaltet ist,
als die Änderung eine Ableitung, insbesondere eine zweite Ableitung, der Größe (y), zu bestimmen,
wobei eine Krafteinwirkung auf das erste Element (E1) bestimmt wird, wenn ein Wert der zweiten Ableitung einen Schwellwert übersteigt.

3. Taktile Sensorvorrichtung (100, 200, 300) nach einem der Ansprüche 1 und 2,
wobei die Positionierungseinheit (110, 210, 310) einen Aktuator (214), bevorzugt einen Piezoaktuator, aufweist, um den Endeffektor (112, 212) zu positionieren,
wobei die Steuerung (120, 220) ausgestaltet ist, den Aktuator anzusteuern, bevorzugt
basierend auf der Differenz einen Stellwert für den Aktuator (214) zu berechnen und an den Aktuator (214) auszugeben,
eine Änderung des Stellwerts zu bestimmen und
basierend auf der Änderung des Stellwerts eine Krafteinwirkung auf das erste Element (E1) zu bestimmen.

4. Taktile Sensorvorrichtung (100, 200, 300) nach Anspruch 3,
wobei die Steuerung (120, 220) einen PID-Regler (222) aufweist und ausgestaltet ist, den Stellwert des Aktuators (214) mit dem PID-Regler (222) zu bestimmen.

5. Taktile Sensorvorrichtung (100, 200, 300) nach einem der vorstehenden Ansprüche, wobei der Kontakt zwischen dem ersten Element (E1) und dem zweiten Element (E2) über einen Punktkontakt (117) darstellt wird.

6. Taktile Sensorvorrichtung (100, 200, 300) nach einem der vorstehenden Ansprüche, wobei die Steuerung (120, 220) ausgestaltet ist, die Position des Endeffektors (112, 212) periodisch zu modulieren.

7. Taktile Sensorvorrichtung (100, 200, 300) nach einem der vorstehenden Ansprüche, die weiter aufweist:
zumindest einen Linearpositionierer (111), wobei der zumindest eine Linearpositionierer (111) zum Positionieren der Positionierungseinheit (110, 210, 310) und/oder des zweiten Elements (E2) ausgestaltet ist,
wobei bevorzugt die Steuerung (120, 220) ausgestaltet ist, die Position des Linearpositionierers (111) auf einen vordefinierten Sollwert zu regeln.

8. Taktile Sensorvorrichtung (100, 200, 300) nach einem der vorstehenden Ansprüche, wobei eine Reglerschleife für die Position des Endeffektors (112, 212, 312) geschlossen ist.

9. Inkrementelle Messeinrichtung mit der taktilen Sensorvorrichtung (300) nach einem der vorstehenden Ansprüche und einer Messeinheit zur Referenzierung der inkrementellen Messeinrichtung, wobei die Messeinheit das erste Element umfasst, wobei die Steuerung weiter ausgestaltet ist, einen Abstand zwischen dem ersten Element (E1) und dem zweiten Element (E2) zu bestimmen.

10. Inkrementelle Messeinrichtung nach Anspruch 9, wobei die Messeinheit eine optische Messeinheit ist und zum Beispiel ein Interferometer (315) oder einen optischen Encoder umfasst.

11. Taktile Sensorvorrichtung (100, 200, 300) nach Anspruch 5, wobei die Steuerung (120, 220) weiter ausgestaltet ist, das erste Element (E1) und das zweite Element (E2) orthogonal zur Antastrichtung zueinander zu positionieren und daraus ein Höhenprofil einer Ebene des zweiten Elements (E2) zu erstellen.

12. System mit drei taktilen Sensorvorrichtungen (100, 200, 300) jeweils nach einem der vorstehenden Ansprüche zur Ausrichtung von zwei ebenen Elementen, bevorzugt durch drei Punktkontakte, wobei sich die Punktkontakte örtlich in der Nähe des Endeffektors der zugehörigen taktilen Sensorvorrichtung (100, 200, 300) befinden.

13. Verfahren (400) zur Bestimmung einer Krafteinwirkung auf ein erstes Element (E1) durch das zweite Element (E2), bevorzugt unter Verwendung der taktilen Sensorvorrichtung (100, 200, 300) nach einem der vorstehenden Ansprüchen, mit den Schritten:
Verbinden (410) eines Endeffektors einer Positionierungseinheit mit einem ersten Element (E1) zur Positionierung des ersten Elements (E1),
Detektieren (420) einer Änderung der Position des Endeffektors,
Regeln (430) einer Position des Endeffektors auf einen vordefinierten Sollwert,
Wiederholtes Bestimmen (440) einer Differenz eines Istwerts zu dem vordefinierten Sollwert der Position des Endeffektors,
Wiederholtes Bestimmen (450) einer Änderung der Differenz oder einer von der Differenz abhängigen Größe (y), und
basierend auf der Änderung der Differenz oder der von der Differenz abhängigen Größe (y) Bestimmen (460) einer Krafteinwirkung durch ein zweites Element (E2) auf das mit dem Endeffektor verbundene erste Element (E1).

14. Computerprogramm mit Programmmitteln, die eine taktile Sensorvorrichtung (100, 200, 300) nach Anspruch 1 dazu veranlassen, die Schritte des erfindungsgemäßen Verfahrens (400) nach Anspruch 13 auszuführen, wenn das Computerprogramm auf der taktilen Sensorvorrichtung (100, 200, 300) ausgeführt wird.
